(19) Europäisches Patentamt
European Patent Office
Office européen des brevets

(11) EP 1 710 703 A1

(12) DEMANDE DE BREVET EUROPEEN

(43) Date de publication:
11.10.2006 Bulletin 2006/41

(51) Int Cl.:
*G06F 12/08* (2006.01)

(21) Numéro de dépôt: 06290497.4

(22) Date de dépôt: 29.03.2006

(84) Etats contractants désignés:
AT BE BG CH CY CZ DE DK EE ES FI FR GB GR
HU IE IS IT LI LT LU LV MC NL PL PT RO SE SI
SK TR
Etats d'extension désignés:
AL BA HR MK YU

(30) Priorité: 04.04.2005 FR 0503320

(71) Demandeur: STMICROELECTRONICS SA
92120 Montrouge (FR)

(72) Inventeurs:
• Cousin, Jean-Philippe
38100 Grenoble (FR)
• Berenguer, Jean-José
38000 Grenoble (FR)
• Pelissier, Gilles
38180 Seyssins (FR)

(74) Mandataire: Bentz, Jean-Paul
Novagraaf Technologies,
122, rue Edouard Vaillant
92593 Levallois-Perret Cedex (FR)

(54) **Cohérence de cache dans un système multiprocesseurs à mémoire partagée**

(57) L'invention porte notamment sur un processeur numérique (9,10), comprenant :
-une mémoire cache (93, 103) ;
-une interface (95, 105) d'échange de données;
-une interface (97, 107) d'échange d'informations de surveillance de trafic ;
-une interface (94, 104) de requête d'opération mémoire externe;
-une unité (92, 102) de gestion d'opérations mémoire, déterminant une nécessité de mise en cohérence, émettant une requête de mise en cohérence sur l'interface de requête d'opération mémoire externe, traitant des informations d'opération mémoire reçues sur l'interface de surveillance de trafic et identifiant une adresse, déterminant la présence et l'état des données à l'adresse identifiée, transmettant sur l'interface de surveillance de trafic une indication de l'opération mémoire qui va être effectuée sur l'interface d'échange de données, et transmettant l'opération mémoire indiquée sur l'interface d'échange de données.

Fig. 2

**Description**

L'invention concerne de façon générale la conception des systèmes numériques, et en particulier les appareils à processeurs multiples partageant une mémoire.

Un certain nombre de systèmes numériques comprennent plusieurs processeurs pour fournir des performances accrues, notamment pour pallier aux limites de fréquence d'un unique processeur, en particulier pour les systèmes sur puce (system on chip en langue anglaise). Chaque processeur d'un tel système peut synchroniser son fonctionnement avec les autres et peut partager des données par l'intermédiaire d'opérations de lecture/écriture dans des emplacements mémoire partagés par tous les processeurs. Pour fournir des accès aux données avec des temps de réponse réduits et avec une grande bande passante, chaque processeur dispose d'une mémoire cache contenant une copie locale de données d'un emplacement mémoire partagé. Comme les différents processeurs peuvent contenir des copies en doublon d'un même emplacement mémoire dans leur mémoire cache, il est nécessaire de conserver une cohérence entre ces mémoires cache. Cette cohérence peut être assurée au niveau logiciel ou matériel. La solution matérielle permet d'optimiser l'échange des données en réduisant le coût de synchronisation. Ainsi, lorsqu'une donnée dans une mémoire cache est modifiée par un processeur, les autres mémoires cache des autres processeurs sont automatiquement mises à jour pour refléter précisément ce changement.

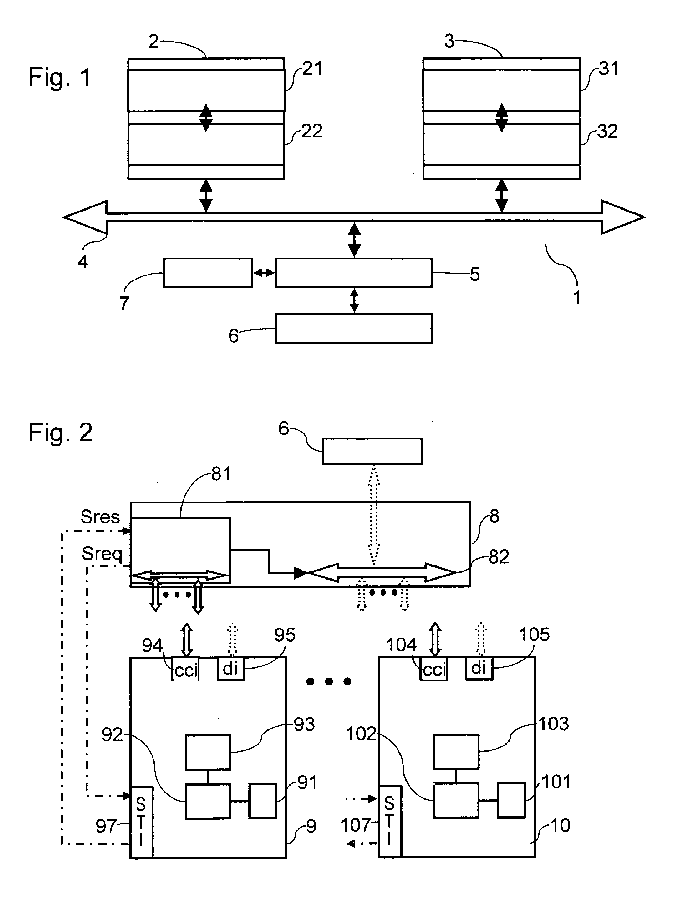

La figure 1 illustre un procédé de surveillance de trafic (snooping method en anglais) sur un bus global connectant les mémoires cache des processeurs à une mémoire partagée par l'intermédiaire d'un pont (bridge en anglais). Le système numérique 1 de la figure 1 présente des processeurs 2 et 3 munis respectivement des unité de traitement 21 et 31 et des mémoires cache 22 et 32. Le système 1 présente également un bus 4 destiné à faciliter les opérations de mise en cohérence des mémoires caches 22 et 32. Le bus 4 couple les processeurs 2 et 3 au pont 5, le pont 5 étant lui-même couplé à une mémoire partagée 6 et à un canal d'entrée/sortie 7. L'interface de chaque processeur avec le bus présente 120 bits, 64 bits étant réservés aux données et 56 bits étant réservés à une adresse et au code d'opération.

Le pont 5 comprend un contrôleur mémoire ainsi qu'un circuit logique pour réaliser des transactions de surveillance de trafic sur le bus 4. Les processeurs 2 et 3 et leurs mémoires cache 22 et 32 gèrent les transactions de surveillance de trafic mémoire sur le bus 4. Les processeurs 2 et 3 utilisent des données de surveillance de trafic pour maintenir le contenu de leur mémoire cache cohérent avec la mémoire cache des autres processeurs.

Un tel système présente des inconvénients. La mise à jour des mémoires cache des processeurs nécessite de nombreux accès à la mémoire partagée. Le temps de réponse des processeurs à une requête externe est ainsi accru, le trafic sur le bus est important et la consommation électrique globale du système est importante.

L'invention vise à minimiser un ou plusieurs de ces inconvénients. L'invention porte ainsi sur un procédé de mise en cohérence des mémoires cache de plusieurs processeurs avec une mémoire partagée, comprenant les étapes suivantes :

- un processeur détermine la nécessité d'une opération mémoire externe pour des données à maintenir cohérentes et transmet une requête de mise en cohérence de cache à un dispositif de surveillance de trafic ;
- le dispositif de surveillance de trafic transmet à tous les processeurs une information d'opération mémoire contenant l'adresse des données à maintenir cohérentes ;
- chaque processeur détermine la présence des données dans sa mémoire cache et détermine la nécessité d'effectuer une opération mémoire de mise en cohérence de ces données ;
- chaque processeur transmet au dispositif de surveillance de trafic un message indiquant l'état des données dans sa mémoire cache et indiquant l'opération mémoire qu'il va effectuer pour ces données ;
- chaque processeur effectue l'opération mémoire indiquée au dispositif de surveillance de trafic ;
- le dispositif de surveillance de trafic effectue les opérations mémoire transmises selon un ordre fixé en fonction de l'état des données dans les mémoires cache des processeurs.

Selon une variante:

- l'état des données dans les mémoires cache des processeurs est défini selon le protocole MESI ;
- lorsqu'un processeur traite une requête de stockage concernant des données à l'état S, E ou M dans sa mémoire cache, il écrit les données de la requête dans sa mémoire cache, place l'état de ces données à M et n'effectue pas d'écriture de ces données dans la mémoire partagée en l'absence d'une information d'opération mémoire sur ces données ;
- lorsqu'un processeur reçoit une information d'opération mémoire sur des données à l'état M dans sa mémoire cache, il transmet au dispositif de surveillance de trafic un message indiquant qu'il va effectuer une écriture dans la mémoire partagée, le dispositif de surveillance de trafic effectue alors l'écriture des données dans la mémoire partagée puis l'opération mémoire indiquée dans l'information d'opération mémoire.

**EP 1 710 703 A1**

Selon encore une variante, un processeur détermine la nécessité d'une opération mémoire externe pour des données n'ayant pas à être maintenues cohérentes, le processeur transmet une requête d'opération mémoire externe au dispositif de surveillance de trafic sans requête de mise en cohérence de cache, le dispositif de surveillance de trafic effectue prioritairement cette opération mémoire entre le processeur et la mémoire partagée.

L'invention porte également sur un processeur numérique, comprenant :

- une mémoire cache ;
- une interface d'échange de données adressables dans la mémoire cache ;
- une interface d'échange d'informations de surveillance de trafic ;
- une interface de requête d'opération mémoire externe;
- une unité de gestion d'opérations mémoire, apte à séquentiellement déterminer une nécessité de mise en cohérence de la mémoire cache et émettre une requête de mise en cohérence de cache sur l'interface de requête d'opération mémoire externe, à traiter des informations d'opération mémoire reçues sur l'interface de surveillance de trafic et identifiant une adresse de données, à déterminer la présence et l'état des données à l'adresse identifiée dans sa mémoire cache, à transmettre sur l'interface de surveillance de trafic une indication de l'opération mémoire qu'il va effectuer sur l'interface d'échange de données adressables dans la mémoire cache, et à transmettre l'opération mémoire indiquée sur l'interface d'échange de données adressables.

Selon une variante, l'état des données dans la mémoire cache est défini selon le protocole MESI et l'unité de gestion d'opérations mémoire tient à jour l'état des données de sa mémoire cache en fonction des informations d'opération mémoire reçues sur l'interface de surveillance de trafic et des opérations mémoires effectuées par le processeur.

Selon encore une autre variante, on utilise un processeur :

- comprenant un premier registre mémorisant une adresse de la mémoire cache et un bit de verrouillage de cette adresse, un second registre mémorisant un bit ;
- dans lequel, lors de l'exécution d'un chargement et d'une écriture de données à une adresse de la mémoire cache, ce chargement et cette écriture étant liés:
- l'unité de gestion d'opérations mémoire est apte à :

  - commander une lecture des données dans la mémoire cache, mémoriser ladite adresse dans le premier registre, verrouiller le bit de verrouillage et émettre une requête de mise en cohérence de cache ;
  - réceptionner l'information d'opération mémoire d'écriture en réponse et déterminer si l'information requiert que le processeur effectue une écriture des données ;
  - si l'information requiert que le processeur effectue l'écriture des données, vérifier si son bit de verrouillage est verrouillé, transmettre sur l'interface de surveillance de trafic une indication d'une opération d'écriture, écrire les données dans sa mémoire cache, déverrouiller son bit de verrouillage et marquer le succès de l'opération d'écriture dans le second registre ;
  - si l'information requiert qu'un autre processeur effectue une écriture des données, déverrouiller le bit de verrouillage, marquer l'échec de l'opération d'écriture dans le second registre et relancer l'exécution du chargement et de l'écriture liés des données.

L'invention porte encore sur un dispositif de surveillance de trafic, comprenant :

- un circuit d'interconnexion entre une mémoire partagée et les mémoires cache de processeurs, apte à réceptionner des opérations mémoires transmises par les processeurs ;
- un circuit de gestion de cohérence et de transfert de données, apte à traiter des requêtes d'opérations mémoire externes de plusieurs processeurs et à en sélectionner une, à transmettre à tous les processeurs une information contenant l'adresse des données à maintenir cohérentes correspondant à la requête sélectionnée, apte à traiter un message de chaque processeur indiquant l'état des données dans sa mémoire cache et indiquant l'opération mémoire qu'il va effectuer pour ces données, apte à commander au circuit de connexion d'effectuer les opérations mémoire transmises selon un ordre fixé en fonction de l'état des données dans les mémoires cache des processeurs.

Selon une variante, le circuit de gestion de cohérence et de transfert de données est apte à recevoir d'un processeur une requête d'opération mémoire pour des données n'ayant pas à être maintenues cohérentes, et à commander au circuit de connexion d'effectuer cette opération mémoire prioritairement entre le processeur et la mémoire partagée.

L'invention porte par ailleurs sur un système numérique, comprenant :

3

- un dispositif de surveillance de trafic tel que défini ci-dessus;
- plusieurs processeurs tels que définis ci-dessus, dont les interfaces d'échange d'informations de surveillance de trafic et de requête d'opération mémoire sont connectées au dispositif de surveillance de trafic et dont les interfaces d'échange de données adressables sont connectées au circuit de connexion du dispositif de surveillance de trafic;
- une mémoire générale partagée connectée au circuit de connexion du dispositif de surveillance de trafic.

Selon encore une variante, le système est intégré sous forme de système sur puce.

D'autres caractéristiques et avantages de l'invention ressortiront clairement de la description qui en est faite ci-après, à titre indicatif et nullement limitatif, en référence aux dessins annexés, dans lesquels :

- la figure 1 illustre un système numérique selon l'art antérieur ;
- la figure 2 illustre un système numérique mettant en oeuvre l'invention ;
- la figure 3 illustre variante d'un processeur selon l'invention.

L'invention propose de séparer le système en deux éléments : des processeurs spécifiques rattachés au système de cohérence de cache (utilisables dans un contexte mono-processeur) et un dispositif de surveillance de trafic gérant les opérations de cohérence de cache entre ces processeurs et une mémoire partagée. Dans un contexte multiprocesseurs, ces deux interfaces fonctionnent de manière coordonnée. Dans un premier temps, un processeur requiert une opération mémoire externe et transmet une requête dite cohérente au SIU par l'intermédiaire d'une interface spécifique. Le SIU réceptionne cette requête et informe les autres processeurs rattachés au système de cohérence de cache. Chaque processeur qui reçoit la requête renvoie au SIU l'opération mémoire qui va être envoyée sur une interface de données et envoie l'opération mémoire sur cette interface de données. Le SIU détermine alors l'ordre des opérations mémoire nécessaires pour maintenir la cohérence des données entre les mémoires cache des processeurs et les effectue en priorité. Dans un second temps, le SIU valide l'opération mémoire externe du processeur et réalise le transfert des données requis par cette opération.

La figure 2 illustre un système numérique mettant en oeuvre l'invention. Ce système comprend une mémoire partagée 6, un SIU 8 et des processeurs 9 et 10.

La mémoire partagée 6 peut être de tout type : une mémoire cache de niveau L2 ou une mémoire RAM standard. Le mécanisme de surveillance de trafic selon l'invention peut être appliqué indépendamment de la structure de la mémoire partagée 6.

Les processeurs 9 et 10 présentent respectivement :

- des unités centrales de traitement 91 et 101 (nommées CPU par la suite) ;
- des unités de gestion d'opérations mémoire 92 et 102 (nommées LSU par la suite) ;
- des mémoires cache 93 et 103. Les mémoires cache 93 et 103 sont par exemple des mémoires de niveau L1 mémorisant des instructions et des données. ;
- des interfaces de requête d'opération mémoire externe 94 et 104 (nommées interfaces CCI par la suite) ;
- des interfaces d'échanges de données 95 et 105 (nommées interfaces DI par la suite) ;
- des interfaces d'échange de surveillance de trafic 97 et 107 (nommées interfaces STI par la suite).

Les processeurs utilisés peuvent être des processeurs 32 bits à très long mot d'instruction (Very Long Instruction Word en langue anglaise) présentant une mémoire cache de données de 32 kiloOctets à 4 voies. Les processeurs 9 et 10 utilisent une gestion de données modifiées usuellement nommée write-back en anglais : afin de réduire les échanges entre les mémoires cache 93 et 103 et la mémoire partagée 6, lorsque des données sont modifiées dans une mémoire cache, elles ne sont pas inscrites dans la mémoire partagée 6 tant qu'un accès à ces données n'a pas été requis. Lorsqu'un accès à ces données est requis, cet accès est précédé de l'écriture des données modifiées de la mémoire cache dans la mémoire partagée 6.

Le SIU 8 comprend :

- un circuit 81 de gestion de cohérence et de transfert de données ;
- un circuit d'interconnexion 82 entre les DI 95, 105 et la mémoire partagée 6.

Les interfaces CCI 94 et 104 et les interfaces STI 97 et 107 sont connectées au circuit 81. Les interfaces DI 95 et 105 sont connectées au circuit 82. Bien que l'exemple illustré ne comprenne que deux processeurs 9 et 10, l'homme du métier saura aisément mettre en oeuvre l'invention pour un plus grand nombre de processeurs.

De façon connue en soi, le LSU 92 effectue une opération mémoire interne sur la mémoire cache 93 lorsqu'il détermine qu'une opération mémoire externe n'est pas nécessaire. Le fonctionnement du système va être décrit lorsque le processeur 9 initie une opération mémoire externe.

Le LSU 92 reçoit une requête d'opération mémoire provenant du CPU 91. Cette requête fournit un code d'opération déterminant si l'opération mémoire est un chargement ou un stockage, et une adresse à laquelle l'opération doit être effectuée. La requête précise également si une cohérence doit être garantie pour les données mémorisées à cette adresse.

De préférence, chaque page de la mémoire cache 93 présente un attribut indiquant si son contenu doit être mis en cohérence ou non. La gestion par page des données de la mémoire cache ajoute une grande flexibilité en permettant de différencier des blocs de données, notamment pour déterminer si les données peuvent être cohérentes. Le LSU 92 vérifie si l'adresse indiquée dans la requête d'opération mémoire est présente dans la mémoire cache 93 et lit l'état des données à cette adresse. Un état peut être associé à chaque ligne de la mémoire cache 93. Cet état est par exemple défini par des marqueurs au protocole MESI. Pour rappel, des états selon le protocole MESI sont associés à des données dans la mémoire cache d'un processeur. Ces états ont les significations suivantes :

L'état M pour modifié signifie que la mémoire cache du processeur est seule détentrice d'une copie modifiée et valide des données: ni les mémoires cache des autres processeurs, ni la mémoire principale partagée ne disposent de cette copie modifiée des données.

L'état E pour exclusif signifie que la mémoire cache du processeur et la mémoire principale partagée sont détentrices d'une copie des données valides, mais que les mémoires cache des autres processeurs ne détiennent pas cette copie.

L'état S pour partagé signifie que les données dans la mémoire cache du processeur sont éventuellement détenues par la mémoire cache d'autres processeurs et que ces données sont également mémorisées dans la mémoire principale partagée.

L'état I pour invalide signifie que les données dans la mémoire cache du processeur ne sont pas valides.

En fonction de l'état des données et du type d'opération mémoire requis, le LSU 92 détermine qu'une opération mémoire externe est nécessaire pour réaliser l'opération mémoire requise et garantir la cohérence des données.

Le tableau ci-dessous fournit les critères de décision du LSU 92.

| Opération mémoire requise | Mise en cache OK | Attribut cohérence de page | Etat des données | Emission CCR | Opération externe nécessaire |
|---|---|---|---|---|---|
| Chargement | Non | Non | ∀ | Non | Oui |
| Chargement | Oui | Non | I | Non | Oui |
| Chargement | Oui | Non | M-E-S | Non | Non |
| Stockage | Non | Non | ∀ | Non | Oui |
| Stockage | Oui | Non | I | Non | Oui |
| Stockage | Oui | Non | S | Non | Oui |
| Stockage | Oui | Non | M-E | Non | Non |
| Chargement | Non | Oui | ∀ | Oui | Oui |
| Chargement | Oui | Oui | I | Oui | Oui |
| Chargement | Oui | Oui | M-E-S | Non | Non |
| Stockage | Non | Oui | ∀ | Oui | Oui |
| Stockage | Oui | Oui | I | Oui | Oui |
| Stockage | Oui | Oui | S | Oui | Oui, si une invalidation provenant du SIU est reçue entre la requête CCR et une information Sreq correspondante |

(suite)

| Opération mémoire requise | Mise en cache OK | Attribut cohérence de page | Etat des données | Emission CCR | Opération externe nécessaire |
|---|---|---|---|---|---|
| Stockage | Oui | Oui | S | Oui | Non, si aucune invalidation provenant du SIU n'est reçue entre la requête CCR et une information Sreq correspondante |
| Stockage | Oui | Oui | M-E | Non | Non |

Lorsque le LSU 92 a déterminé qu'une opération cohérente en mémoire externe était nécessaire, il transmet une requête d'opération mémoire externe CCR au circuit 81 par l'intermédiaire de l'interface CCI 94. Les informations complètes concernant l'opération mémoire sont conservées dans le processeur 9.

Dans le cas où l'opération mémoire externe nécessite une mise en cohérence de cache, le circuit 81 réalise un arbitrage entre cette requête CCR de mise en cohérence de cache et des requêtes CCR transmises par d'autres processeurs. Cette requête CCR est placée dans une FIFO, puis traitée par le circuit 81. Du fait de la sérialisation des différentes requêtes CCR, des modifications d'une même donnée dans les mémoires cache de différents processeurs ne génèrent pas de conflits. Une requête CCR est traitée à chaque cycle par le circuit 81.

La requête CCR comprend un bit de validité de la requête, des bits de code d'opération définissant l'opération mémoire externe requise par le processeur , les caratéristiques de l'operation et des bits d'adresse physique indiquant l'emplacement mémoire sur lequel doit être effectuée l'opération mémoire. Les bits d'adresse peuvent ne contenir que les bits de poids forts représentatifs (alignés par exemple sur la taille d'une ligne de la mémoire cache).

Un codage possible du code d'opération d'une requête CCR peut être le suivant:

| Opération requise | Bits de la requête CCR | | Commentaires |
|---|---|---|---|
| | 3 | 2:0 | |
| NOP | x | 000 | Opération mémoire ne provenant pas d'un processeur (par exemple DMA ou composant exteme) |
| Chargement | x | 001 | Opération de chargement |
| Stockage | x | 010 | Opération de stockage |
| Purge addresses | x | 011 | Opération de purge des adresses ; permet le transfert de données de la mémoire cache interne à la memoire partagée |
| Réservé | | 1xx | Réservé pour des opérations à définir |
| Invalidate | 1 | xxx | Invalider des données lors d'un chargement, d'un stockage ou d'une purge |

Le circuit 81 renvoie un signal indiquant s'il accepte ou non la requête CCR sur l'interface CCI 94. Le protocole utilisé par l'interface CCI 94 est donc du type requête/accord.

Le circuit 81 vérifie si la requête CCR ne correspond pas à une autre opération (par exemple une lecture) en cours à la même adresse. S'il n'y a pas d'opération en cours à la même adresse, le circuit 81 détermine si une autre opération mémoire doit être effectuée pour maintenir la cohérence des données à l'adresse indiquées dans la requête CCR. Ainsi, si la requête CCR du processeur 9 requiert une opération mémoire sur des données qui sont mémorisées à l'état M dans la mémoire cache 103 du processeur 10, le circuit 81 détermine que ces données de la mémoire cache 103 doivent être inscrites au préalable dans la mémoire partagée 6 pour garantir leur cohérence.

Le circuit 81 transmet une information Sreq à l'ensemble des processeurs qui lui sont connectés. L'information Sreq est notamment transmise aux interfaces STI 97 et 107 des processeurs 9 et 10. Les interfaces de STI 97 et 107 comprennent par exemple des FIFO connectées respectivement aux LSU 92 et 102 pour la mise en tampon des informations Sreq. Une information Sreq comprend l'adresse à laquelle l'opération mémoire doit être effectuée, un bit de validation pour chaque processeur, des bits d'identification du processeur à l'origine de la requête CCR, et un code d'opération. Le code d'opération peut se limiter à un bit signifiant l'invalidation ou non des données à l'adresse indiquée dans l'information Sreq. Un bit requérant l'invalidation des données fait passer l'état des données à I dans la mémoire cache.

Chaque processeur renvoie par son interface STI un signal indiquant s'il accepte ou non l'information Sreq au circuit 81. Le protocole utilisé pour l'information Sreq est donc du type requête/accord. La requête CCR ne progresse alors dans un pipeline du circuit 81 que si l'ensemble des processeurs a accepté l'information Sreq associée. Un processeur peut notamment refuser une information Sreq si sa FIFO de stockage des informations Sreq est pleine.

Les LSU 92 et 102 traitent l'information Sreq disposée en tête de FIFO. Le LSU d'un processeur détermine si c'est sa requête CCR ou celle d'un autre processeur qui est à l'origine de l'information Sreq. Les interfaces STI 97 et 107 peuvent présenter une entrée de validation sur laquelle le circuit 81 applique un signal si le processeur est à l'origine de l'information Sreq. Pour le processeur 9, le LSU 92 détermine qu'il est à l'origine de l'information Sreq et l'état des données de la mémoire cache 93 n'est donc pas testé. Le processeur 9 a la connaissance de l'opération qui sera effectuée sur son interface DI 95. Les informations complètes conservées dans le processeur 9 sont alors utilisées pour traiter l'information Sreq. Pour le processeur 10 qui n'est pas à l'origine de l'information Sreq, la présence et l'état des données indiquées dans l'information Sreq sont vérifiés dans la mémoire cache 103.

En fonction du résultat des vérifications de son LSU, chaque processeur détermine alors l'opération mémoire qu'il effectuera sur son interface DI pour garantir la cohérence de cache. Le processeur qui a émis la requête CCR détermine qu'il peut effectuer son opération mémoire par son interface DI. Un processeur qui dispose des données indiquées dans l'information Sreq à l'état modifié détermine que son interface DI doit effectuer une écriture dans la mémoire partagée 6.

Ensuite, chaque processeur transmet au circuit 81 un message Sres en réponse à l'information Sreq. Chaque message Sres comprend un code d'opération indiquant l'opération mémoire que le processeur est sur le point d'effectuer sur son interface DI (une lecture, un stockage ou une absence d'opération) et un bit de validation indiquant si la donnée est ou non dans sa mémoire cache. Les messages Sres sont transmis selon l'ordre de traitement des informations Sreq dans chaque processeur. Les processeurs effectuent alors l'opération mémoire indiquée dans leur message Sres sur leur interface DI.

Le codage du code d'opération d'un message Sres peut être le suivant :

| Opération | 1 : 0 | Commentaires |
|---|---|---|
| Nop | 00 | Aucune opération ne sera effectuée sur l'interface d'échange |
| Lecture | 01 | Le processeur est sur le point d'effectuer une lecture sur son interface d'échange de données |
| Ecriture | 10 | Le processeur est sur le point d'effectuer une écriture sur son interface d'échange de données |
| Lecture + Ecriture | 11 | Le processeur est sur le point d'effectuer une lecture et une ecriture sur son interface d'échange de données (lecture + eviction de ligne) |

En fonction des messages Sres reçus et de l'état des données déterminé pour chaque mémoire cache, le circuit 81 effectue un arbitrage entre les opérations mémoire effectuées par les interfaces DI des processeurs et une planification de ces opérations. Par exemple, lorsque le processeur 9 est à l'origine de l'information Sreq et indique une lecture dans son message Sres et lorsque le processeur 10 indique une écriture dans son message Sres (ce qui signifie qu'il dispose des données à l'état modifié), le circuit 81 commande au circuit 82 d'effectuer tout d'abord l'opération d'écriture du processeur 10 dans la mémoire partagée 6, puis commande au circuit 82 d'effectuer l'opération de lecture des données du processeur 9 dans la mémoire cache 103 du processeur 10. Les données sont ainsi cohérentes dans la mémoire cache 103 et dans la mémoire partagée 6 avant l'opération de lecture du processeur 9. Les données incluses dans les mémoires cache 93 et 103 ne sont donc transmises au circuit d'échange de données 82 que lorsque l'adresse des données a été préalablement transmise par le circuit 81 aux processeurs. Ainsi, la mise en mémoire tampon des données des mémoires cache 93 et 103 dans le SIU 8 est réduite et la cohérence des données est implicitement garantie. L'état des données dans les mémoire cache 93 et 103 est alors modifié en fonction des opérations mémoire réalisées sur les interfaces DI 95 et 105. Les processeurs ne sont pas influencés par l'arbitration des transferts.

Pour une opération mémoire requise par le LSU 92, les opérations effectuées par les processeurs 9 et 10 sont résumées dans le tableau ci-dessous dans différents cas de figure.

| P9: Test cache | Attribut de page (caché ou non) | P9: Etat cache | P10: Etat cache | P9: Requ. CCR | P9: Requ Sreq | P9: Mess Sres | P10: Requ Sreq | Arbitr. SIU | Commentaires |
|---|---|---|---|---|---|---|---|---|---|
| CR | | | | | | | | | Pas de requête CCR, données chargées depuis la mémoire 93 |
| CM | Non | | I | Charge | Invalid | Lect | Nop | P9 | La lecture des données non cohérentes |
| | | | S-E→I | Charge | Invavlid | Lect | Nop | P9 | peut conduire à leur invalidation |
| | | | M→I | Charge | Invalid | Lect | Ecrit | P10/P9 | Les données de P10 sont préalablement écrites dans M6. |
| | Oui | I→E | I | Charge | | Lect | Nop | P9 | Aucun autre processeur n'a les données valides, l'état des données de P9 passe donc à E |
| | | I→S | S-E→S | Charge | | Lect | Nop | P9 | Au moins un autre processeur a les données valides, l'état des données de P9 passe donc à S |
| | | I→S | M→S | Charge | | Lect | Ecrit | P10/P9 | Données de P10 préalablement écrites dans M6, état des données passe à S dans P9 et P10 |

(suite)

| P9: Test cache | Attribut de page (caché ou non) | P9: Etat cache | P10: Etat cache | P9: Requ. CCR | P9: Requ Sreq | P9: Mess Sres | P10: Requ Sreq | Arbitr. SIU | Commentaires |
|---|---|---|---|---|---|---|---|---|---|
| S | Non | I | I-E-S→I | Stocke | Invalid | Stocke | Nop | P9 | Message Sres de P9 placé dans une FIFO, mémoire cache de P10 invalidée |
| | | | M→I | Stocke | Invalid | Stocke | Ecrit | P10/P9 | Message Sres de P9 placé dans une FIFO, données de P10 écrites dans M6 |
| | Oui | S→I | I-S→I | Stocke | Invalid | Stocke | Nop | P9 | P10 invalide les données de P9 avant l'émission de l'information Sreq. |
| | | S→M | I-S→I | Stocke | Invalid | Nop | Nop | Nop | Aucune invalidation des données avant l'émission de l'information Sreq. Stockage des données géré en interne dans P9. P9 invalide P10 |
| | | M-E→M | | | | | | | Stockage des données géré en interne dans P9 |

P9 et P10 identifient les processeurs 9 et 10, M6 identifie la mémoire partagée.

Dans la première colonne, CR signifie chargement interne réussi, CM signifie chargement interne manqué, S signifie stockage. La deuxième colonne indique si les données doivent être mises en cohérence. Les troisième et quatrième colonnes indiquent les états MESI des données en mémoire cache avant et après l'opération mémoire. Une opération Ecrit de P10 correspond à un stockage dans la mémoire partagée 6.

Dans le cas où l'opération mémoire externe ne nécessite pas une mise en cohérence de cache, par exemple lors du transfert d'une instruction, le circuit 81 commande le circuit 82 pour effectuer le transfert requis entre la mémoire partagée 6 et l'interface DI 96. Un tel transfert court-circuite alors le traitement lié à la cohérence de cache dans le SIU.

Un processeur adapté pour mettre en oeuvre l'invention ne nécessitant que des modifications réduites, son surcoût est ainsi limité. Ce processeur peut donc économiquement être utilisé également dans un système mono-processeur. Seuls quelques bits supplémentaires sont nécessaires pour mettre en oeuvre la mise en cohérence de cache, sans avoir à gérer la transaction des données adressables.

Comme une opération sur une interface DI d'un processeur suit les échanges de son interface STI et de son interface CCI, chaque processeur effectue ses opérations sans contraintes liées à la gestion mémoire et le SIU 8 effectue la gestion de la cohérence de cache en utilisant seulement quelques bits, ce qui garantit une structure simplifiée du circuit 81 et un temps limité entre une requête de mise en cohérence de cache Cc et une information Sreq correspondante.

Chaque processeur peut accéder aux données contenues dans la mémoire cache des autres processeurs par l'intermédiaire du SIU 8. La mise en cohérence des mémoires cache par ce type d'accès réduit les accès à la mémoire partagée 6. La bande passante sur le bus de la mémoire partagée 6 est ainsi ménagée au bénéfice d'autres transferts. Les échanges avec la mémoire partagée 6 étant également limités, la consommation électrique du système est considérablement réduite.

Un processeur peut en outre aisément transférer les données de sa mémoire cache pour basculer sur une autre tâche, sans faire intervenir la mémoire partagée 6.

Le nombre de processeurs inclus dans le système peut être modifié aisément, sans impliquer de modifications de la programmation d'applications utilisant le système.

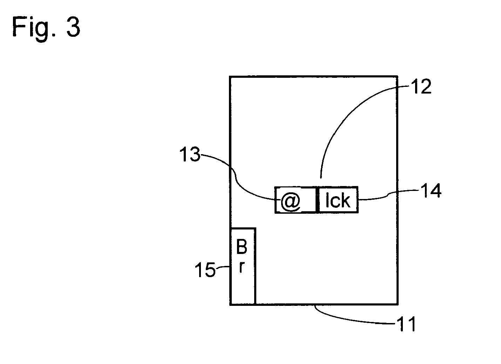

La figure 3 illustre une variante de processeur 11 supportant des instructions de type chargement lié (linked load en anglais) et écriture conditionnelle (conditional store en anglais). Le but de ces instructions est qu'une séquence liant une lecture et une écriture d'un processeur ne puisse être rompue par une écriture intermédiaire d'un autre processeur sur ces données.

Le processeur 11 présente un registre de branchement 15 et un registre de verrouillage d'adresse 12 mémorisant l'adresse physique 13 et un bit de verrouillage 14.

L'exécution d'une instruction de chargement lié se déroule de la façon suivante : l'adresse physique et le bit de verrouillage sont inscrits dans le registre de verrouillage du processeur. Quel que soit le contenu du registre de verrouillage, l'exécution du chargement lié met à jour l'adresse et met à 1 le bit de verrouillage dans le registre de verrouillage. Afin de garantir la cohérence de cache, le bit de verrouillage ne peut pas être mis à 1 par un accès direct.

L'exécution d'une instruction d'écriture conditionnelle se déroule de la façon suivante : le verrouillage du bit de verrouillage est vérifié. Si le bit de verrouillage est à 0, le bit associé du registre de branchement passe à 0. On pourrait également envisager de vérifier l'adresse dans le registre de verrouillage.

Le bit de verrouillage est mis à 0 dans les cas suivants:

- lorsque le processeur qui exécute une instruction d'écriture conditionnelle met à 0 le bit de verrouillage et met à jour le registre de branchement associé ;
- lorsque le processeur effectue une écriture d'un 0 dans le bit de verrouillage ;
- lorsqu'une ligne de cache est retirée de la mémoire cache et correspond à l'adresse contenue dans le registre de verrouillage;
- un autre processeur ou un dispositif externe écrit à l'adresse qui est mémorisée dans le registre de verrouillage.

Lorsque les données sont à l'état S, le processeur transmet une requête CCR lors de l'exécution des instructions liées. La décision de réaliser l'écriture se fait en fonction du résultat de l'information Sreq reçue du SIU.

Pour les états E et M des données, les instructions liées sont exécutées dans le processeur sans requête CCR et donc sans attendre la réception d'une information Sreq du SIU.

L'utilisation de ces types d'instructions est transparente pour le SIU. Un chargement lié est vu comme un chargement classique par le SIU. Une écriture conditionnelle est vue comme une écriture classique par le SIU. Le SIU garantit la liaison entre ces opérations : si une requête de lecture/écriture de données à la même adresse par un processeur est arbitrée après un chargement lié d'un autre processeur, cette requête est bloquée dans le SIU tant que ce chargement lié n'est pas terminé.

La syntaxe suivante peut être utilisée pour ces instructions :

Pour un chargement lié :

Ldwl $ri=[$Rj]

L'adresse pointée par Rj est placée dans le registre de verrouillage.

Pour une écriture conditionnelle :

Stwl $bi,[$Ri]=Rj

Si le contenu du registre de verrouillage est à zero, le bit du registre de branchement est réinitialisé à 0. Si le contenu du registre de verrouillage est à 1 l'ecriture est faite et le bit de verouillage est mis à zero.

Ce type d'instructions peut par exemple être mis en oeuvre pour réaliser plusieurs incréments d'une variable par plusieurs processeurs. Ce type d'instructions vise alors à éviter que deux processeurs ne lisent simultanément la même variable, puis effectuent chacun une écriture de la variable, l'incrément de la variable par un processeur n'étant alors pas pris en compte par l'autre processeur.

Ainsi, pour incrémenter à deux reprises une variable avec deux processeurs distincts, le procédé utilisant ce type d'instructions liées est le suivant :

Chaque processeur exécute une instruction de lecture liée sur la variable. L'adresse physique de la variable et un bit de verrouillage à 1 sont mémorisés dans leur registre de verrouillage. La variable est à l'état S dans la mémoire cache de chaque processeur.

Chaque processeur incrémente en interne la variable et exécute une instruction d'écriture conditionnelle. Comme la variable est à l'état S, chaque processeur transmet une requête de mise en cohérence de cache. Le SIU arbitre entre leurs requêtes et transmet des informations Sreq après avoir arbitré entre les écritures. Ainsi, un premier processeur est sélectionné par des informations Sreq pour effectuer l'écriture. Le premier processeur détermine que son bit de verrouillage est à 1 et conclut ainsi que la variable n'a pas été modifiée entre-temps. Le premier processeur écrit alors la variable incrémentée dans sa mémoire cache et la marque à l'état M. Le second processeur, ayant reçu les informations Sreq correspondant à cette écriture, invalide la variable dans sa mémoire cache et place son bit de verrouillage à 0. Le SIU transmet ensuite des informations Sreq et sélectionne le second processeur pour effectuer son écriture. Le premier processeur ayant la variable à l'état M, il transmet un message Sres pour effectuer une écriture de mise à jour de la variable et met son registre de branchement à 1. Le second processeur constate que les données associées à l'adresse mémorisée dans son registre de verrouillage sont invalides et annule alors son écriture. Le second processeur met à jour le registre de branchement pour marquer que l'opération d'écriture a échoué (état 0). Tant que ce registre de branchement marque l'échec de l'écriture, le second processeur répétera une séquence liant une lecture et une écriture jusqu'à son succès.

Lorsqu'une variable dans une mémoire cache d'un processeur est marquée à E ou M, l'instruction d'écriture conditionnelle est traitée en interne dans le processeur et le bit de verrouillage est placé à 1.

## Revendications

1. Procédé de mise en cohérence des mémoires cache (93, 103) de plusieurs processeurs (9, 10) avec une mémoire partagée (6), **caractérisé en ce qu'**il comprend les étapes suivantes :

   - un processeur détermine la nécessité d'une opération mémoire externe pour des données à maintenir cohérentes et transmet une requête de mise en cohérence de cache à un dispositif de surveillance de trafic (8) ;
   - le dispositif de surveillance de trafic transmet à tous les processeurs une information d'opération mémoire contenant l'adresse des données à maintenir cohérentes ;
   - chaque processeur détermine la présence des données dans sa mémoire cache et détermine la nécessité d'effectuer une opération mémoire de mise en cohérence de ces données;
   - chaque processeur transmet au dispositif de surveillance de trafic un message indiquant l'état des données dans sa mémoire cache et indiquant l'opération mémoire qu'il va effectuer pour ces données ;
   - chaque processeur effectue l'opération mémoire indiquée au dispositif de surveillance de trafic ;
   - le dispositif de surveillance de trafic effectue les opérations mémoire transmises selon un ordre fixé en fonction de l'état des données dans les mémoires cache des processeurs.

2. Procédé selon la revendication 1, dans lequel :

   - l'état des données dans les mémoires cache des processeurs est défini selon le protocole MESI ;
   - lorsqu'un processeur traite une requête de stockage concernant des données à l'état S, E ou M dans sa mémoire cache, il écrit les données de la requête dans sa mémoire cache, place l'état de ces données à M et n'effectue pas d'écriture de ces données dans la mémoire partagée en l'absence d'une information d'opération mémoire sur ces données ;
   - lorsqu'un processeur reçoit une information d'opération mémoire sur des données à l'état M dans sa mémoire cache, il transmet au dispositif de surveillance de trafic (8) un message indiquant qu'il va effectuer une écriture dans la mémoire partagée, le dispositif de surveillance de trafic effectue alors l'écriture des données dans la mémoire partagée puis l'opération mémoire indiquée dans l'information d'opération mémoire.

3. Procédé selon la revendication 1 ou 2, dans lequel :

- un processeur (9, 10) détermine la nécessité d'une opération mémoire externe pour des données n'ayant pas à être maintenues cohérentes ;
- le processeur transmet une requête d'opération mémoire externe au dispositif de surveillance de trafic sans requête de mise en cohérence de cache ;
- le dispositif de surveillance de trafic (8) effectue prioritairement cette opération mémoire entre le processeur et la mémoire partagée.

4. Processeur numérique (9,10), **caractérisé en ce qu'**il comprend :

- une mémoire cache (93, 103) ;
- une interface (95, 105) d'échange de données adressables dans la mémoire cache ;
- une interface (97, 107) d'échange d'informations de surveillance de trafic ;
- une interface (94, 104) de requête d'opération mémoire externe;
- une unité (92, 102) de gestion d'opérations mémoire, apte à séquentiellement déterminer une nécessité de mise en cohérence de la mémoire cache et émettre une requête de mise en cohérence de cache sur l'interface de requête d'opération mémoire externe, à traiter des informations d'opération mémoire reçues sur l'interface de surveillance de trafic et identifiant une adresse de données, à déterminer la présence et l'état des données à l'adresse identifiée dans sa mémoire cache, à transmettre sur l'interface de surveillance de trafic une indication de l'opération mémoire qu'il va effectuer sur l'interface d'échange de données adressables dans la mémoire cache, et à transmettre l'opération mémoire indiquée sur l'interface d'échange de données adressables.

5. Processeur numérique (9, 10) selon la revendication 4, dans lequel :

- l'état des données dans la mémoire cache est défini selon le protocole MESI ;
- l'unité (91, 101) de gestion d'opérations mémoire tient à jour l'état des données de sa mémoire cache en fonction des informations d'opération mémoire reçues sur l'interface de surveillance de trafic et des opérations mémoires effectuées par le processeur.

6. Processeur numérique selon la revendication 4 ou 5,

- comprenant un premier registre mémorisant une adresse de la mémoire cache et un bit de verrouillage de cette adresse, un second registre mémorisant un bit ;
- dans lequel, lors de l'exécution d'un chargement et d'une écriture de données à une adresse de la mémoire cache, ce chargement et cette écriture étant liés, l'unité de gestion d'opérations mémoire est apte à :

    - commander une lecture des données dans la mémoire cache, mémoriser ladite adresse dans le premier registre, verrouiller le bit de verrouillage et émettre une requête de mise en cohérence de cache ;
    - réceptionner l'information d'opération mémoire d'écriture en réponse et déterminer si l'information requiert que le processeur effectue une écriture des données ;
    - si l'information requiert que le processeur effectue l'écriture des données, vérifier si son bit de verrouillage est verrouillé, transmettre sur l'interface de surveillance de trafic une indication d'une opération d'écriture, écrire les données dans sa mémoire cache, déverrouiller son bit de verrouillage et marquer le succès de l'opération d'écriture dans le second registre ;
    - si l'information requiert qu'un autre processeur effectue une écriture des données, déverrouiller le bit de verrouillage, marquer l'échec de l'opération d'écriture dans le second registre et relancer l'exécution du chargement et de l'écriture liés des données.

7. Dispositif de surveillance de trafic (8), **caractérisé en ce qu'**il comprend :

- un circuit d'interconnexion (82) entre une mémoire partagée et les mémoires cache de processeurs, apte à réceptionner des opérations mémoires transmises par les processeurs ;
- un circuit (81) de gestion de cohérence et de transfert de données, apte à traiter des requêtes d'opérations mémoire externes de plusieurs processeurs et à en sélectionner une, à transmettre à tous les processeurs une information contenant l'adresse des données à maintenir cohérentes correspondant à la requête sélectionnée, apte à traiter un message de chaque processeur indiquant l'opération mémoire qu'il va effectuer pour ces données, apte à commander au circuit de connexion d'effectuer les opérations mémoire transmises selon un ordre fixé en fonction de l'état des données dans les mémoires cache des processeurs.

8. Dispositif de surveillance de trafic (8) selon la revendication 7, dans lequel le circuit de gestion de cohérence et de transfert de données est apte à recevoir d'un processeur une requête d'opération mémoire pour des données n'ayant pas à être maintenues cohérentes, et à commander au circuit de connexion d'effectuer cette opération mémoire prioritairement entre le processeur et la mémoire partagée.

9. Système numérique, comprenant :

- un dispositif de surveillance de trafic (8) selon la revendication 7 ou 8;
- plusieurs processeurs (9, 10) selon l'une quelconque des revendications 4 à 6, dont les interfaces d'échange d'informations de surveillance de trafic et de requête d'opération mémoire sont connectées au dispositif de surveillance de trafic et dont les interfaces d'échange de données adressables sont connectées au circuit de connexion du dispositif de surveillance de trafic;
- une mémoire générale partagée (6) connectée au circuit de connexion du dispositif de surveillance de trafic.

10. Système selon la revendication 9 intégré sous forme de système sur puce.

Fig. 1

Fig. 2

Fig. 3

**Office européen
des brevets**

**RAPPORT DE RECHERCHE EUROPEENNE**

Numéro de la demande

EP 06 29 0497

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/120876 A1 (HASS DAVID ET AL) 26 juin 2003 (2003-06-26) * abrégé; figures 1-4,7,10 * * alinéas [0055], [0065] * * alinéa [0190] - alinéa [0203] * * alinéa [0134] - alinéa [0168] * ----- | 1-10 | INV. G06F12/08 |
| A | US 6 874 065 B1 (PONG FONG ET AL) 29 mars 2005 (2005-03-29) * figure 2 * * colonne 1, ligne 22 - colonne 2, ligne 54 * ----- | 1-10 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| La Haye | 25 août 2006 | Jardon, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 29 0497

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-08-2006

| Document brevet cité au rapport de recherche | Date de publication | Membre(s) de la famille de brevet(s) | Date de publication |
|---|---|---|---|
| US 2003120876 A1 | 26-06-2003 | US 2003154346 A1 | 14-08-2003 |
| | | US 2003009624 A1 | 09-01-2003 |
| | | US 2003037205 A1 | 20-02-2003 |
| | | US 2003014589 A1 | 16-01-2003 |
| | | US 2003009621 A1 | 09-01-2003 |
| | | US 2003009627 A1 | 09-01-2003 |
| | | US 2003009628 A1 | 09-01-2003 |
| | | US 2003009629 A1 | 09-01-2003 |
| | | US 2003033481 A1 | 13-02-2003 |
| | | US 2003033488 A1 | 13-02-2003 |
| | | US 2003033479 A1 | 13-02-2003 |
| | | US 2003009625 A1 | 09-01-2003 |
| | | US 2003009626 A1 | 09-01-2003 |
| US 6874065 B1 | 29-03-2005 | AUCUN | |

EPO FORM P0460

Pour tout renseignement concernant cette annexe : voir Journal Officiel de l'Office européen des brevets, No.12/82